# EUROPEAN PATENT SPECIFICATION

(11) **EP 0 525 575 B1**
(45) Date of publication and mention of the grant of the patent: **11.09.1996**
(21) Application number: 92112395.6
(22) Date of filing: 20.07.1992
(51) Int. Cl.: H02H 7/093

(54) **Control circuit for an electric motor of a household electrical appliance, in particular a washing machine, dishwasher or the like**
Steuerschaltung für elektrischen Motor eines elektrischen Haushaltgerätes, insbesondere einer Waschmaschine eines Geschirrspülvers oder dergleichen
Circuit de commande pour moteur électrique d'un appareil électro-ménager, en particulier une machine à laver, lave-vaisselle ou analogues

(30) Priority: 22.07.1991 IT MI912021
(43) Date of publication of application: 03.02.1993
(73) Proprietor: WHIRLPOOL EUROPE B.V., NL-5507 SK Veldhoven (NL)
(72) Inventor: Vasconi, Enrico, I-21024 Biandronno (VA) (IT)
(74) Representative: Guerci, Alessandro

(56) References cited:
- DE-A- 2 428 681

## Description

This invention relates to a control circuit for an electric motor of a household electrical appliance, such as a washing machine, dishwasher or the like.

The electric motor contained in an household electrical appliance is usually controlled by a control unit or module connected via suitable electrical branches to a member for measuring the rotation speed of the rotor of this motor. Said member is generally a tachometer dynamo.

This latter is connected to the control unit generally via two electrical branches, which are connected to two inputs thereof.

An electrical signal generally of a frequency based on the electric motor speed measurement made by the dynamo is taken from one of these inputs (which for simplicity will be defined as the control input).

This signal is used by the control unit or module to verify the correct operation of the motor. To achieve this, the signal is compared by said module with a corresponding reference signal, the module acting on the motor to halt it if this comparison gives a particular result.

In this respect, if a fault occurs in the control circuit or motor, the signal at the control input undergoes a variation with a positive gradient. This variation is sensed by the control module by virtue of said comparison, and causes the module to act on the motor, with consequent stoppage thereof.

Various known control circuits of the aforesaid type provide acceptable operation.

These circuits do not however function accurately if the tachometer dynamo suffers a short-circuit or if the motor rotor becomes blocked.

Various solutions (see for example DE-A-2 428 681, which discloses a control circuit as specified in the preamble of claim 1) have been proposed in attempting to overcome this drawback, but they do not completely solve the said problem.

Control circuits are however available which are able to act at any moment to halt an electric motor whenever one of the aforesaid problems occurs. These circuits are of complicated and costly construction and comprise a large number of components, prolonging their assembly time.

An object of the present invention is to provide a control circuit of the aforesaid type which is reliable and acts on the electric motor to halt it in sufficient time to prevent its possible damage.

A further object is to provide a control circuit which is of simple structure, comprises only a small number of components and is of quick and low-cost construction.

A further object is to provide a circuit of the stated type which can be obtained by modifying already known circuits.

These and further objects which will be apparent to the expert of the art are attained by a control circuit of the aforesaid type, characterised by comprising, in one of the electrical connection branches between the tachometer dynamo and the control unit or module, at least one static switch having a control electrode which is connected to the second branch connecting said dynamo to the unit or module, said switch being in a conducting state during normal motor operation and changing to an inhibited state following blockage of said motor or short-circuiting of the dynamo, said inhibited state resulting in the disconnection of the dynamo from the unit or module and causing this latter to act on said motor to halt it.

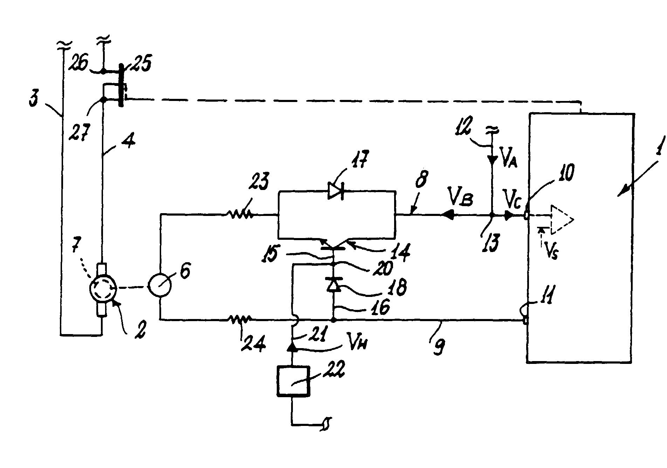

The present invention will be more apparent from the accompanying drawing, which is provided by way of example and of which the single figure represents a schematic view of a circuit formed in accordance with the invention.

With particular reference to said figure, the circuit comprises a usual control unit or module 1 for controlling the operation of an electric motor 2 of a household electrical appliance (not shown), powered in any known manner via electrical lines 3 and 4.

The motor 2 is controlled by the module 1 by means of a usual tachometer dynamo 6 which measures the rotation speed of a usual rotor 7 of the motor 2 in known manner.

The dynamo 6 is connected to the module 1 via two electrical branches 8 and 9, which are connected to two inputs 10 and 11 of said module.

At one of these inputs, namely the input 10, the branch 8 is connected to a branch 12 carrying an electrical signal V_{A} originating from another known part of the circuit, not shown. The connection between the branch 8 and the branch 12 is made at a node 13.

The signal taken by the module at the input 10 is compared with a corresponding reference or threshold signal V_{S}. By means of this comparison the said module (in known manner, briefly described hereinafter) determines whether the motor 2 and dynamo 6 are operating correctly or not.

In the branch 8 there is included at least one static switch 14 defined by a transistor with its base 15 connected to the other branch 9 via an electrical branch 16.

A stabilizer diode 17 is connected in parallel with the switch or transistor 14, a further diode 18 being connected into the branch 16.

Between the diode 18 and the base 15 there is a node 20 to which a branch 21 from a usual timer 22 is connected.

Usual electrical resistors 23 and 24 are connected into the branches 8 and 9 in proximity to the dynamo 6.

The module 1 controls a contactor device or static switch (power MOS) 25 arranged to act across the points 26 and 27 of the electrical power line 4.

The described circuit operates ad follows.

During normal operation of the motor 2 (and hence of the household electrical appliance, such as a washing machine, of which it forms part), the device 25 closes the line 4.

At the node 13 the signal V_{A} from the branch 12 is split into signals V_{B} and V_{C} directed towards the switch or transistor 14 (normally conducting) and towards the input 10.

Specifically, the greater the rotation speed of the rotor 7 of the motor 2, the greater the "absorption" of the signal V_{B} by the dynamo 6. Consequently the signal V_{C} reaching the input 10 of the module 1 varies in accordance with the speed of the rotor 6.

The signal reaching the module 1 is therefore indicative of the rotor speed, and enables the module to evaluate said speed.

As stated, during normal operation of the motor 2, and with the dynamo 6 operating in the usual manner, a signal V_{B} circulates through the branches 8 and 9. Part of the signal V_{B} passes from the branch 9 to the branch 16, to reach the base 15 of the transistor 14 and maintain its conducting state.

It will now be assumed that the rotor 7 becomes blocked or the dynamo 6 undergoes short-circuiting.

In such a case the signal V_{B} no longer reaches the branch 9 and is therefore no longer able to reach the base 15 of the transistor 14, which is therefore inhibited. This has the effect of "opening" the static switch and consequently preventing the signal V_{B} passing from the node 13 to the branch 8.

The entire signal V_{A} consequently enters the module 1 via the input 10.

Under these conditions, the signal entering the module 1 reaches a value close to the threshold signal V_{S}. This is evaluated by the module 1, using a suitable comparison algorithm, as indicating the "opening" of the static switch consequent on a fault in the motor 2 or in the dynamo 6.

The module 1 therefore acts on the device 25 to interrupt power to the motor 2, so halting it.

During the initial transient in which the motor 2 is starting, the dynamo 6 obviously senses no rotation of the rotor 7.

Consequently no signal passes through the branch 8 as the transistor 14 is inhibited by virtue of the fact that no signal from the electrical branch 16 reaches its base.

The branch 8 is therefore open.

To change said transistor to its conducting state and hence close the branch 8, the branch 16 is connected to the branch 21 which originates from the timer 22. This latter is powered and controlled in known manner (for example via the usual timer of the household electrical appliance). On starting the household electrical appliance it generates in known manner a signal V_{H} which passes through the branch 21 to reach the base 15 of the transistor 14. This signal cannot reach the branch 9 because of the presence of the diode 18.

In this manner, the static switch is "closed" as the transistor 14 assumes its conducting state.

Hence the signal V_{A} originating in known manner from the branch 12 following the start of the household electrical appliance splits into the signals V_{B} and V_{C}. The signal V_{B} is hence able to pass through the branches 8 and 9.

The module, not sensing any interruption in the branch 8, hence closes the device 25, to allow the motor 2 to be powered and the rotor 7 to move.

This therefore enables the module 1 to power the motor 2 even under that condition (the initial condition) in which the module should keep the motor unpowered following the detection of an "open circuit", ie that the branch 8 is open.

One particular embodiment of the invention has been described.

Various embodiments are however possible within the scope of the appended claims.

A circuit formed in accordance with the invention is reliable, of simple construction and of very low cost.

## Claims

1. A control circuit for an electric motor (2) of a household electrical appliance, in particular a washing machine, dishwasher or the like, comprising a unit or module (1) for controlling the operation of said motor (2) and connected to a tachometer dynamo (6) for measuring the rotation speed of the rotor (7) of the motor (2), said tachometer dynamo (6) enabling said unit or module (1) to verify the correct operation of the motor (2), said dynamo (6) being connected to two inputs (10, 11) of said unit or module (1) via two electrical branches (8, 9), characterised by comprising, in one (8) of the electrical connection branches (8, 9) between the tachometer dynamo (6) and the control unit or module (1), at least one static switch (14) having a control electrode (15) which is connected to the second branch (9) connecting said dynamo (6) to the unit or module (1), said switch (14) being in a conducting state during normal operation of the motor (2) and changing to an inhibited state following blockage of said motor (2) or short-circuiting of the dynamo (6), said inhibited state resulting in the disconnection of the dynamo (6) from the unit or module (1) and causing this latter to act on said motor (6) to halt it.

2. A circuit as claimed in claim 1, characterised in that the static switch is a transistor (14) having its base (15) connected to the second connection branch (9) between the dynamo (6) and the control unit or module (1).

3. A circuit as claimed in claim 2, characterised in that the transistor base (15) is connected to the second branch (9) via an electrical branch (16) incorporating a diode (18), an electrical branch (21) originating from a known timer member (22) being connected the diode (18) and said base (15).

4. A circuit as claimed in claim 1, characterised by comprising a diode (17) in parallel with the static switch (14).

5. A circuit as claimed in claim 1, characterised in that the control unit or module (1) operates on a contactor device or static switch (25) provided in a power line (4) to the electric motor (2).

## Patentansprüche

1. Steuerschaltung für einen elektrischen Motor (2) eines elektrischen Haushaltsgeräts, insbesondere einer Waschmaschine, einer Geschirrspülmachine oder dgl. mit einer Einheit oder einem Modul (1) zur Steuerung des Motors (2), wobei diese Einheit oder dieses Modul mit einem Drehzahlmesserdynamo (6) verbunden ist, der die Drehzahl des Läufers (7) des Motors (2) mißt, der ferner die Einheit oder das Modul (1) in die Lage versetzt, die richtige Arbeitsweise des Motors (2) zu prüfen, und der an zwei Eingänge (10, 11) der Einheit oder des Moduls (1) über zwei elektrische Stromzweige (8, 9) angeschlossen ist, **dadurch gekennzeichnet**, daß in einem (8) der elektrischen Stromzweige (8, 9) zwischen dem Drehzahlmesserdynamo (6) und der Steuereinheit oder dem Steuermodul (1) mindestens ein statischer Schalter (14) mit einer Steuerelektrode (15) angeordnet ist, die mit dem zweiten, zwischen dem Drehzahlmesserdynamo (6) und der Steuereinheit oder dem Steuermodul (1) liegenden Stromzweig (9) verbunden ist, wobei dieser Schalter (14) während des normalen Motorbetriebs in leitendem Zustand ist und bei einer Blockade des Motors (2) oder einem Kurzschluß des Drehzahlmesserdynamos (6) in den gesperrten Zustand gerät, der die Abtrennung des Drehzahlmesserdynamos (6) von der Steuereinheit oder dem Steuermodul (1) zur Folge hat und diese Steuereinheit oder dieses Steuermodul (1) veranlaßt, den Motor (2) zum Stillsetzen zu bringen.

2. Steuerschaltung nach Anspruch 1, dadurch gekennzeichnet, daß der statische Schalter ein Transistor (14) ist, dessen Basis (15) mit dem zweiten Stromzweig (9) zwischen dem Dynamo (6) und der Steuereinheit oder dem Steuermodul (1) verbunden ist.

3. Steuerschaltung nach Anspruch 2, dadurch gekennzeichnet, daß die Basis (15) des Transistors (14) mit dem zweiten Stromzweig (9) über einen eine Diode (18) enthaltenden, elektrischen Stromzweig (16) verbunden ist und an einen elektrischen Stromzweig (21) angeschlossen ist, der von einem bekannten Zeitschalter (22) herkommt.

4. Steuerschaltung nach Anspruch 1, dadurch gekennzeichnet, daß dem statischen Schalter (14) eine Diode (17) parallelgeschaltet ist.

5. Steuerschaltung nach Anspruch 1, dadurch gekennzeichnet, daß die Steuereinheit oder das Steuermodul (1) auf ein Kontaktelement oder einen statischen Schalter (25) einwirkt, der in einer Stromversorgungsleitung (4) des Elektromotors (2) liegt.

## Revendications

1. Circuit de commande pour un moteur électrique (2) d'un appareil électroménager, en particulier un lave-linge, un lave-vaisselle ou analogue, comprenant une unité, ou module, (1) pour commander le fonctionnement dudit moteur (2), et connecté à une dynamo tachymétrique (6) pour mesurer la vitesse de rotation du rotor (7) du moteur (2), ladite dynamo tachymétrique (6) permettant à ladite unité, ou module, (1) de vérifier le fonctionnement correct du moteur (2), ladite dynamo (6) étant connectée à deux entrées (10, 11) de ladite unité, ou module, (1) par deux branches électriques (8, 9) ; caractérisé en ce qu'il comprend, dans l'une (8) des branches de connexion électrique (8, 9) entre la dynamo tachymétrique (6) et l'unité, ou module, de commande (1), au moins un interrupteur statique (14) ayant une électrode de commande (15) qui est connectée à la seconde branche (9) reliant ladite dynamo (6) à l'unité, ou module, (1), ledit interrupteur (14) étant dans un état de conduction en fonctionnement normal du moteur (2) et passant dans un état non conducteur à la suite du blocage dudit moteur (2) ou de la mise en court-circuit de la dynamo (6), ledit état non conducteur ayant pour résultat de déconnecter la dynamo (6) de l'unité, ou module, (1), en amenant ce dernier à agir sur ledit moteur (2) pour l'arrêter.

2. Circuit selon la revendication 1, caractérisé en ce que l'interrupteur statique est un transistor (14) dont la base (15) est connectée à la seconde branche de connexion (9) entre la dynamo (6) et l'unité, ou module, de commande (1).

3. Circuit selon la revendication 2, caractérisé en ce que la base de transistor (15) est connectée à la seconde branche (9) par l'intermédiaire d'une branche électrique (16) contenant une diode (18), une branche électrique (21) partant d'un élément temporisateur connu (22) étant connectée à la diode (18) et à ladite base (15).

4. Circuit selon la revendication 1, caractérisé en ce qu'il comprend une diode (17) en parallèle avec l'interrupteur statique (14).

5. Circuit selon la revendication 1, caractérisé en ce que l'unité, ou module, de commande (1) fonctionne comme un dispositif contacteur, ou interrupteur, statique (25) disposé dans une ligne d'alimentation (4) du moteur électrique (2).
